# EUROPEAN PATENT SPECIFICATION

(11) **EP 1 554 031 B1**
(45) Date of publication and mention of the grant of the patent: **20.12.2006**
(21) Application number: 03809352.2
(22) Date of filing: 23.10.2003
(51) Int. Cl.: B01D 53/14, B01D 53/62

(54) **PROCESS FOR REMOVAL AND CAPTURE OF CARBON DIOXIDE FROM FLUE GASES**
VERFAHREN ZUR ENTFERNUNG UND GEWINNUNG VON KOHLENDIOXID AUS ABGASEN
PROCEDE D'ELIMINATION ET DE CAPTURE DE DIOXYDE DE CARBONE DE GAZ DE COMBUSTION

(30) Priority: 23.10.2002 EP 02079415
(43) Date of publication of application: 20.07.2005
(73) Proprietor: SHELL INTERNATIONALE RESEARCH MAATSCHAPPIJ B.V., 2596 HR Den Haag (NL)
(72) Inventor: GEERLINGS, Jacobus, JohanneS, Cornelis, NL-1031 CM Amsterdam (NL); WESKER, Evert, NL-1031 CM Amsterdam (NL)
(86) International application number: PCT/EP2003/050753
(87) International publication number: WO 2004/037391

(56) References cited:
- EP-A- 0 551 876
- EP-A- 1 216 744
- US-A- 1 783 901
- PATENT ABSTRACTS OF JAPAN vol. 1998, no. 14, 31 December 1998 (1998-12-31) & JP 10 249153 A (NATL INST FOR RES IN INORG MATER), 22 September 1998 (1998-09-22)

## Description

The present invention relates to a process for the removal and capture of carbon dioxide from flue gas.

The rising of the carbon dioxide concentration in the atmosphere due to the increased use of energy derived from fossil fuels potentially has a large impact on climate change. Measures to reduce the atmospheric carbon dioxide concentration are therefore needed.

A large part of the total carbon dioxide emission to the atmosphere is carbon dioxide contained in industrial flue gases. In a flue gas stream, carbon dioxide is present at low concentrations, typically at a carbon dioxide partial pressure between 50 and 150 mbar.

A technique that is generally used in industry to remove CO₂ from gas streams that contain carbon dioxide in such a low concentration is solvent extraction. Solvent extraction is known in the art, see for example US 1,783,901 or US 1,934,472. Solvent extraction involves exposing a carbon dioxide containing gas stream to a solvent, typically an aqueous amine solution, which reacts with the CO₂ in the gas in an acid-base reaction to yield a soluble carbonate salt according to:

2RNH₂ + CO₂ → RHN₃⁺ + RNH-CO₂⁻

and/or

RNH₂ + CO₂ + H₂O → (RHN₃)⁺ + HCO₃⁻

The solvent extraction reaction is reversible, allowing the solvent to be regenerated by heating.

A disadvantage of solvent extraction is the energy required for the regeneration of the solvent. For solvent extraction of carbon dioxide using an aqueous amine solution as solvent, 1.0 to 2.0 MJ/kg CO₂ is typically required for solvent regeneration.

Another disadvantage of solvent extraction is that the carbon dioxide stream obtained after solvent regeneration is at ambient pressure. Converting ambient pressure carbon dioxide to a form that is suitable for transport and sequestration is energy-consuming, since it would typically involve pressurizing carbon dioxide to high pressures. Examples of prior art carbon dioxide sequestering processes are the use of pressurised carbon dioxide for enhanced oil recovery or for the recovery of coal bed methane.

In view of the above, there is a need for a process enabling both the removal and capture of CO₂ from flue gas, that is less energy-consuming.

We have now found that a novel process combining the steps of solvent extraction of carbon dioxide from flue gas, subsequent regeneration of the solvent while generating a carbon dioxide stream and reacting the carbon dioxide stream in a mineral carbonation step, offers considerable advantages over the processes known in the art to remove and capture carbon dioxide from flue gases.

Accordingly, the present invention relates to a process for the removal and capture of carbon dioxide from flue gas comprising the steps of:
(a) extracting the carbon dioxide from flue gas by contacting the flue gas with a solvent in a solvent extraction zone to obtain a carbon dioxide-depleted flue gas;
(b) regenerating the solvent in a solvent regeneration zone by heating the carbon dioxide-containing solvent to a solvent regeneration temperature and maintaining it at that temperature to obtain a regenerated solvent and a carbon dioxide stream; and
(c) reacting the carbon dioxide stream obtained in step (b) with a bivalent alkaline earth metal silicate in a mineral carbonation zone by contacting the carbon dioxide stream with silicate particles dispersed in an aqueous solution.

Reference herein to a flue gas is to a gas stream containing carbon dioxide in a low concentration, typically having a carbon dioxide partial pressure of at most 300 mbar, more usual between 50 and 150 mbar.

In the process according to the invention, a solvent extraction step, a solvent regeneration step and a mineral carbonation step are combined.

Solvent extraction and solvent regeneration are known in the art. Preferred solvents for carbon dioxide are aqueous solutions of one or more amine compounds. Typical examples are monoethanolamine, diethanolamine, triethanolamine, diglycolamine, methyldiethanolamine, or diisopropanolamine or a combination of two or more thereof. The aqueous amine solution typically contains between 15 and 35% by weight of amine, preferably between 20 and 30% by weight of amine based on the total weight of the solution.

The mineral carbonation step involves the exothermic reaction of carbon dioxide with silicates to form carbonate and silica according to:

(Mg,Ca)ₓSi_{y}O_{x+2y} + xCO₂ → x(Mg,Ca)CO₃ + ySiO₂

The carbon dioxide stream obtained in the solvent regeneration step is contacted with silicate particles dispersed in water or an aqueous electrolyte solution. It will be appreciated that in such dispersion, part of the carbon dioxide will dissolve and may be partly present in the form of HCO₃⁻ or CO₃²⁻ ions.

In the process according to the invention, the heat released in the mineral carbonation step, i.e. step (c), is preferably used for the solvent regeneration step, i.e. step (b). Heat is transferred by means known in the art. Typically, steam is used as a heat transfer medium. With the heat released in step (c), superheated steam may be produced that is used in step (b), either via a heat exchanger or by direct injection of steam.

Preferably, at least 50%, more preferably at least 65% of the heat needed for step (b) is supplied by the heat released in step (c).

In order to be able to use the heat released in step (c) for step (b), the operating temperature in the mineral carbonation zone is preferably between 25°C and 35 °C higher than the solvent regeneration temperature.

The solvent regeneration temperature is preferably between 100 °C and 200 °C, more preferably between 120 °C and 180 °C. The skilled person will appreciate that the solvent regeneration temperature depends inter alia on the solvent used. The thermal stability of the solvent is one of the factors that has to be taken into account.

To maintain the preferred temperature difference between the operating temperature in the mineral carbonation zone and the solvent regeneration temperature, the operating temperature in the mineral carbonation zone is preferably in the range of from 140 to 200 °C. In view of the preferred operating temperature in the mineral carbonation zone, it will be appreciated that the preferred operating pressure in the mineral carbonation zone is in the range of from 3 to 15 bar (absolute).

The carbon dioxide stream obtained in step (b) is preferably pressurized to the pressure prevailing in the mineral carbonation zone. Thus, the carbon dioxide stream obtained in step (b) is preferably pressurized to a pressure in the range of from 3 to 15 bar (absolute), more preferably in the range of from 5 to 13 bar (absolute), before being reacted with the silicate in the mineral carbonation zone in step (c). The preferred pressure range of from 3 to 15 bar (absolute) to which the carbon dioxide stream in the process according to the invention has to be pressurized is considerably lower than the pressure which would be needed to use the carbon dioxide sequestration in processes such as enhanced oil recovery or coal bed methane recovery.

In the mineral carbonation zone, CO₂ is brought into contact with an aqueous solution comprising dispersed silicate particles. This may be carried out in any reactor suitable for gas-solid reactions in the presence of a liquid. Such reactors are known in the art. An example of a suitable reactor is a slurry bubble column.

Preferred bivalent alkaline earth metal silicates for the process of the present invention are calcium and/or magnesium silicates. Other metal ions, such as iron, aluminium, or manganese ions, may be present besides the bivalent alkaline earth metal ions. Especially in naturally-occurring silicates, both bivalent alkaline earth metal ions and other metal ions are present. An example is olivine which contains bivalent iron ions and magnesium ions. Examples of calcium and/or magnesium silicates suitable for the process according to the invention are forsterite, olivine, monticellite, wollastonite, diopside, and enstatite.

Ortho-, di- and ring silicates and silicates having a chain structure are preferred for the process of the invention. Phyllosilicates, which are silicates having a sheet structure, and tectosilicates, which have a framework structure, are less suitable for the process according to the invention.

It is preferred that the silicate particles dispersed in the aqueous solution are small in order to achieve a high reaction rate. Preferably, the silicates particles have an average diameter of at most 0.5 mm, more preferably at most 0.2 mm. Reference herein to the average diameter is to the volume medium diameter D(v,0.5), meaning that 50 volume% of the particles have an equivalent spherical diameter that is smaller than the average diameter and 50 volume% of the particles have an equivalent spherical diameter that is greater than the average diameter. The equivalent spherical diameter is the diameter calculated from volume determinations, e.g. by laser diffraction measurements.

It has been found that the reaction rate of the mineral carbonation reaction can be increased by adding an electrolyte to the water wherein the silicate particles are dispersed. Therefore, the silicate particles are preferably dispersed in an aqueous electrolyte solution. The electrolyte solution is preferably a solution of a salt that has a solubility in water of at least 0.01 moles per litre at 298K and 1 atmosphere, more preferably at least 0.1 moles per litre. Preferred salts are sodium, potassium or barium salts, more preferably chlorides or nitrates of sodium, potassium or barium salts, i.e. NaCl, KCl, BaCl₂, NaNO₃, KNO₃, or Ba(NO₃)₂, even more preferably sodium nitrate.

The electrolyte solution suitably has an electrolyte concentration of at least 0.01 moles/litres, preferably in the range of from 0.1 to 2 moles per litre.

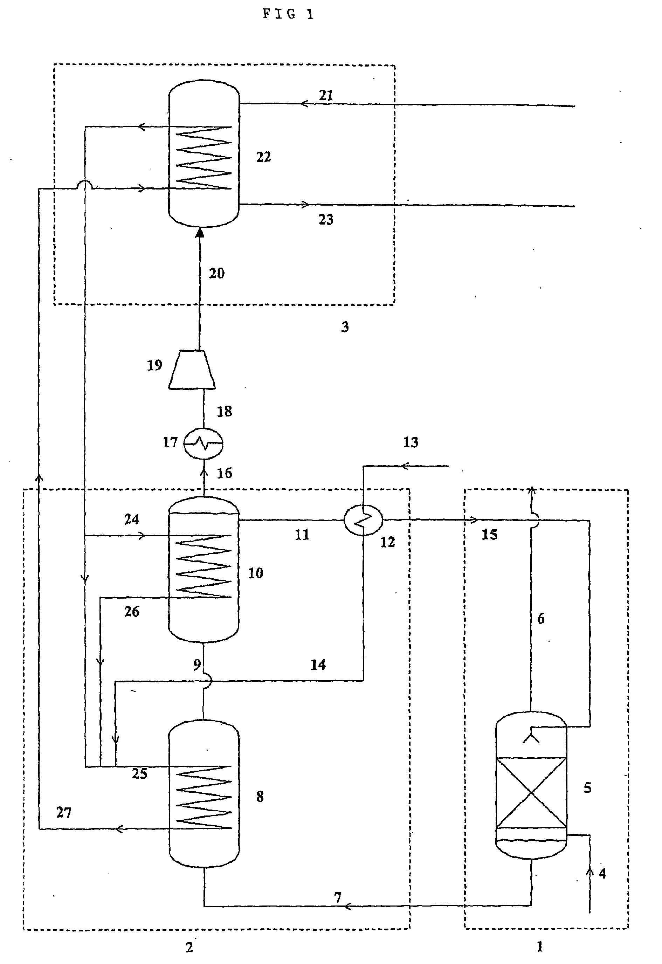

The invention will now be illustrated by means of schematic figure 1.

Figure 1 depicts a typical process scheme of the process according to the invention comprising solvent extraction zone 1, solvent regeneration zone 2 and mineral carbonation zone 3.

In solvent extraction zone 1, a flue gas stream containing carbon dioxide is introduced via line 4 into solvent extraction reactor 5. In solvent extraction reactor 5, an aqueous organic amine solution is present as solvent. The flue gas is intimately contacted with the solvent, thereby allowing the solvent to extract the carbon dioxide from the gaseous stream. The carbon dioxide-depleted flue gas is removed from solvent extraction reactor 5 via line 6.

The carbon dioxide-containing solvent is then led via line 7 to solvent regeneration zone 2 and introduced into solvent heating reactor 8. In reactor 8, the carbon dioxide-containing solvent is heated to the solvent regeneration temperature. The heated carbon dioxide-containing solvent is then led via line 9 to solvent regeneration reactor 10. In solvent regeneration reactor 10, the heated carbon dioxide-containing solvent is maintained at the solvent regeneration temperature to obtain a hot carbon dioxide stream and a hot regenerated solvent. The hot regenerated solvent is led via line 11 to heat exchanger 12, wherein it is condensed. Water is introduced via line 13 into heat exchanger 12 and heated to steam by the heat generated from the condensing reaction. The steam thus generated is led via line 14 to reactor 8. The condensed regenerated solvent is led via line 15 back into solvent extraction reactor 5.

The hot carbon dioxide stream obtained from the solvent regeneration reaction is led from reactor 10 via line 16 to cooler 17 wherein it is cooled. The cooled carbon dioxide stream is led via line 18 to compressor 19, wherein compression takes place. The compressed carbon dioxide stream is led via line 20 into mineral carbonation zone 3. In mineral carbonation zone 3, an aqueous stream comprising dispersed silicate particles is led via line 21 into mineral carbonation reactor 22. In the mineral carbonation reactor 22, they are reacted with carbon dioxide from the compressed carbon dioxide stream. The resulting products, comprising the captured carbon dioxide as carbonate compounds, are removed from mineral carbonation reactor 22 via line 23.

The heat released from the mineral carbonation reaction is used to generate superheated steam. The superheated steam is led via lines 24 and 25, respectively, to reactors 10 and 8, where it is used to maintain reactor 10 at the solvent regeneration temperature and to heat up reactor 8 to the solvent regeneration temperature. The cooled steam from reactor 10 is led via line 26 to reactor 8. The cooled steam from reactor 8 is led via line 27 to mineral carbonation reactor 22.

The process of the invention will now be illustrated by means of the following example.

### EXAMPLE

In a process as shown in Figure 1, a flue gas stream containing 75 mbar (partial pressure) carbon dioxide having a temperature of 50 °C is introduced via line 4 into solvent extraction reactor 5. In solvent extraction reactor 5, an aqueous diethanolamine solution (25 wt% diethanolamine) is present as solvent. The flue gas is intimately contacted with the solvent, thereby allowing the solvent to extract the carbon dioxide from the gaseous stream. The carbon dioxide-depleted flue gas, containing 5 mbar (partial pressure) carbon dioxide and having a temperature of 55 °C, is led from the solvent extraction reactor via line 6. The carbon dioxide-containing solvent, having a temperature of 75 °C, is then led via line 7 to the solvent regeneration zone 2 and introduced into the solvent heating reactor 8.

In reactor 8, the carbon dioxide-containing solvent is heated to 150 °C. For this heating, 3 MJ/kg CO₂ is needed. The heated carbon dioxide-containing solvent is then led via line 9 to the solvent regeneration reactor 10. In the solvent regeneration reactor 10, the heated carbon dioxide-containing solvent is maintained at 150 °C to obtain a hot carbon dioxide stream and a hot regenerated solvent. In this regeneration reaction, 1.2 MJ/kg CO₂ is used. The hot regenerated solvent is led via line 11 to heat exchanger 12, wherein it is condensed and cooled down to 50 °C. In the cooling down process, 4.0 MJ/kg CO₂ is generated. Part of this heat, 1.2 MJ/kg CO₂, is used to generate steam from the water introduced via line 13 into the heat exchanger 12. The remainder of the heat generated in the condensing reaction cannot be used. The steam thus generated, having a temperature of 130 °C, is led via line 14 to reactor 8, where is used to maintain the reactor temperature of 150 °C. The condensed regenerated solvent, having a temperature of 50 °C, is led via line 15 back into the solvent extraction reactor 5.

The hot carbon dioxide stream, having a temperature of 150 °C, obtained from the solvent regeneration reaction is led from reactor 10 via line 16 to a cooler 17 wherein it is cooled down to 50 °C at a pressure of 1 bar (absolute). The cooled carbon dioxide stream is led via line 18 to a compressor 19, wherein compression takes place to 10 bar (absolute). The compressed carbon dioxide stream, having a temperature of 180 °C, is led via line 20 into a mineral carbonation zone 3. In mineral carbonation zone 3, a stream comprising dispersed calcium silicate particles in water is led via line 21 into the mineral carbonation reactor 22. The operating temperature of the mineral carbonation reactor is 180 °C. The dispersed calcium silicate particles are reacted with carbon dioxide from the compressed carbon dioxide stream. In this reaction, 2.2 MJ/kg CO₂ is generated. The resulting products, calcium carbonate and siliciumdioxide compounds, are removed from the mineral carbonation reactor 22 via line 23.

The 2.2 MJ/kg CO₂ heat generated from the mineral carbonation reaction is used to generate superheated steam. The superheated steam, having a temperature of 170 °C and a pressure of 7 bar (absolute) is led via lines 24 and 25, respectively, to reactors 10 and 8, where it is used to maintain reactor 10 at the solvent regeneration temperature and to heat up reactor 8 to the solvent regeneration temperature. The cooled steam from reactor 10, having a temperature of 165 °C, is led via line 26 to reactor 8. The cooled steam/water from reactor 8, having a temperature of 100 °C, is led via line 27 to the mineral carbonation reactor 21. In this example, for the heating of the solvent in reactor 8, 3 MJ/kg CO₂ is needed and for the regeneration of the solvent in reactor 10, 1.2 MJ/kg CO₂ is needed. From the heat generated in the condensing reaction, 1.2 MJ/kg CO₂ heat can be used, so for the reactions in the solvent regeneration zone, an additional 3 MJ/kg CO₂ is needed. In the mineral carbonation zone, 2.2 MJ/kg CO₂ is generated and 2.0 MJ/kg CO₂ of this heat can be used for the reactions in the solvent regeneration zone.

Thus, in this example about 68% of the heat needed for the reactions in the solvent regeneration zone is supplied by the reactions in the mineral carbonation zone.

## Claims

1. A process for the removal and capture of carbon dioxide from flue gas comprising the steps of:
(a) extracting the carbon dioxide from flue gas by contacting the flue gas with a solvent in a solvent extraction zone to obtain a carbon dioxide-depleted flue gas;
(b) regenerating the solvent in a solvent regeneration zone by heating the carbon dioxide-containing solvent to a solvent regeneration temperature and maintaining it at that temperature to obtain a regenerated solvent and a carbon dioxide stream; and
(c) reacting the carbon dioxide stream obtained in step (b) with a bivalent alkaline earth metal silicate in a mineral carbonation zone by contacting the carbon dioxide stream with silicate particles dispersed in an aqueous solution.

2. A process according to claim 1, wherein the heat released in step (c) is used in step (b).

3. A process according to claim 1 or 2, wherein at least 50%, preferably at least 65% of the heat needed for step (b) is supplied by the heat released in step (c).

4. A process according to any of claims 1 to 3, wherein the operating temperature in the mineral carbonation zone is between 25 °C and 35 °C higher than the solvent regeneration temperature.

5. A process according to any of claims 1 to 4, wherein the solvent regeneration temperature is between 100 °C and 200 °C, preferably between 120 °C and 180 °C.

6. A process according to any of claims 1 to 5, wherein the carbon dioxide stream obtained in step (b) is pressurized to a pressure in the range of from 3 to 15 bar (absolute), preferably in the range of from 5 to 13 bar (absolute), before being reacted with the silicate in the mineral carbonation zone.

7. A process according to any of the preceding claims, wherein the operating temperature in the mineral carbonation zone is in the range of from 140 to 200 °C.

8. A process according to any of the preceding claims, wherein the solvent is an aqueous amine solution, preferably an aqueous solution of monoethanolamine, diethanolamine, triethanolamine, diglycolamine, methyldiethanolamine or diisopropanolamine, or a combination of two or more thereof.

9. A process according to any of the preceding claims, wherein the bivalent alkaline earth metal silicate is a magnesium or calcium silicate.

10. A process according to any of the preceding claims, wherein the silicates particles have an average diameter of at most 0.5 mm, preferably at most 0.2 mm.

## Patentansprüche

1. Verfahren zur Entfernung und zum Auffangen von Kohlendioxid aus einem Abgas, umfassend die Schritte von:
(a) Extrahieren des Kohlendioxids aus dem Abgas durch Inkontaktbringen des Abgases mit einem Lösungsmittel in einer Lösungsmittelextraktionszone, um ein an Kohlendioxid verarmtes Abgas zu erhalten;
(b) Regenerieren des Lösungsmittels in einer Lösungsmittelregenerierungszone durch Erhitzen des Kohlendioxidenthaltenden Lösungsmittels auf eine Lösungsmittelregenerierungstemperatur und Halten desselben bei dieser Temperatur, um ein regeneriertes Lösungsmittel und einen Kohlendioxidstrom zu erhalten und
(c) Umsetzen des im Schritt (b) erhaltenen Kohlendioxidstroms mit einem zweiwertigen Erdalkalimetallsilikat in einer Mineralkarbonisierungszone durch Inkontaktbringen des Kohlendioxidstromes mit in einer wäßrigen Lösung verteilten Silikatteilchen.

2. Verfahren nach Anspruch 1, worin die im Schritt (c) freigesetzte Wärme im Schritt (b) verwendet wird.

3. Verfahren nach Anspruch 1 oder 2, worin wenigstens 50%, vorzugsweise wenigstens 65% der für den Schritt (b) benötigten Wärme durch die im Schritt (c) freigesetzte Wärme bereitgestellt wird.

4. Verfahren nach einem der Ansprüche 1 bis 3, worin die Betriebstemperatur in der Mineralkarbonisierungszone 25°C bis 35°C höher als die Lösungsmittelregenerierungstemperatur ist.

5. Verfahren nach einem der Ansprüche 1 bis 4, worin die Lösungsmittelregenerierungstemperatur von 100°C bis 200°C, vorzugsweise von 120°C bis 180°C beträgt.

6. Verfahren nach einem der Ansprüche 1 bis 5, worin der im Schritt (b) erhaltene Kohlendioxidstrom unter einen Druck im Bereich von 3 bis 15 bar (absolut), vorzugsweise im Bereich von 5 bis 13 bar (absolut), gesetzt wird, bevor er mit dem Silikat in der Mineralkarbonisierungszone umgesetzt wird.

7. Verfahren nach einem der vorstehenden Ansprüche, worin die Betriebstemperatur in der Mineralkarbonisierungszone im Bereich von 140 bis 200°C beträgt.

8. Verfahren nach einem der vorstehenden Ansprüche, worin das Lösungsmittel eine wäßrige Aminlösung, vorzugsweise eine wäßrige Lösung von Monoethanolamin, Diethanolamin, Triethanolamin, Diglycolamin, Methyldiethanolamin oder Diisopropanolamin, oder eine Kombination von zwei oder mehreren hievon ist.

9. Verfahren nach einem der vorstehenden Ansprüche, worin das zweiwertige Erdalkalimetallsilikat ein Magnesium- oder Calciumsilikat ist.

10. Verfahren nach einem der vorstehenden Ansprüche, worin die Silikatteilchen einen mittleren Durchmesser von höchstens 0,5 mm, vorzugsweise von höchstens 0,2 mm aufweisen.

## Revendications

1. Procédé d'élimination et de capture de dioxyde de carbone de gaz de combustion, comprenant les étapes :
(a) d'extraction du dioxyde de carbone de gaz de combustion en mettant en contact le gaz de combustion avec un solvant dans une zone d'extraction au solvant pour obtenir un gaz de combustion appauvri en dioxyde de carbone;
(b) de régénération du solvant dans une zone de régénération de solvant en chauffant le solvant contenant du dioxyde de carbone à une température de régénération de solvant et en le maintenant à cette température pour obtenir un solvant régénéré et un courant de dioxyde de carbone; et
(c) de réaction du courant de dioxyde de carbone obtenu à l'étape (b) avec un silicate de métal alcalinoterreux divalent dans une zone de carbonatation minérale en mettant en contact le courant de dioxyde de carbone avec des particules de silicate dispersées dans une solution aqueuse.

2. Procédé selon la revendication 1, dans lequel la chaleur dégagée à l'étape (c) est utilisée à l'étape (b).

3. Procédé selon la revendication 1 ou 2, dans lequel au moins 50%, de préférence, au moins 65% de la chaleur nécessaire à l'étape (b) sont fournis par la chaleur dégagée à l'étape (c).

4. Procédé selon l'une quelconque des revendications 1 à 3, dans lequel la température d'exploitation dans la zone de carbonatation est de 25°C à 35°C supérieure à la température de régénération de solvant.

5. Procédé selon l'une quelconque des revendications 1 à 4, dans lequel la température de régénération de solvant se situe entre 100°C et 200°C, de préférence, entre 120°C et 180°C.

6. Procédé selon l'une quelconque des revendications 1 à 5, dans lequel le courant de dioxyde de carbone de l'étape (b) est comprimé à une valeur de pression comprise dans la plage de 3 à 15 bars (pression absolue), de préférence, dans la plage de 5 à 13 bars (pression absolue), avant de le faire réagir avec le silicate dans la zone de carbonatation minérale.

7. Procédé selon l'une quelconque des revendications précédentes, dans lequel la température d'exploitation dans la zone de carbonatation minérale se situe dans la plage de 140 à 200°C.

8. Procédé selon l'une quelconque des revendications précédentes, dans lequel le solvant est une solution aqueuse d'amine, de préférence, une solution aqueuse de monoéthanolamine, de diéthanolamine, de triéthanolamine, de diglycolamine, de méthyldiéthanolamine ou de diisopropanolamine, ou une combinaison d'une ou de plusieurs d'entre elles.

9. Procédé selon l'une quelconque des revendications précédentes, dans lequel le silicate de métal alcalinoterreux divalent est un silicate de magnésium ou de calcium.

10. Procédé selon l'une quelconque des revendications précédentes, dans lequel les particules de silicate ont un diamètre moyen de 0,5 mm au maximum, de préférence, de 0,2 mm au maximum.
